# EUROPEAN PATENT APPLICATION

(11) **EP 1 939 702 A2**
(43) Date of publication of application: **02.07.2008**
(21) Application number: 07024521.2
(22) Date of filing: 18.12.2007
(51) Int. Cl.: G05B 19/048

(54) **Plant control system, monitoring operation device, and plant monitoring program**

(30) Priority: 26.12.2006 JP 2006350362
(71) Applicant: KABUSHIKI KAISHA TOSHIBA, Tokyo (JP)
(72) Inventor: Kaneko, Takaomi, Tokyo 105-8001 (JP); Nakai, Akimasa, Tokyo 105-8001 (JP)
(74) Representative: Kramer - Barske - Schmidtchen

(57) **Abstract**

A plant control system (1a) includes a monitoring operation device (10a) and a centralized management device (30a). The monitoring operation device (10a) comprises a calling unit (153) which transmits a transmission request of a maintenance screen data of a control program to the management device (30a), a maintenance screen generation unit (154) which generates a maintenance screen by synthesizing the maintenance screen data and control program state values, and a display processing unit (155) which displays the maintenance screen on a display. The centralized management device (30a) includes a storage device (33) which stores control device data (333) and maintenance screen data (332), and a maintenance screen processing unit (351) which transmits the maintenance screen data corresponding to appliances and control program state values indicating states of the control program to the monitoring operation device (10a).

## Description

The present invention relates to a plant monitoring system which easily operates appliances to control a plant and operates a control program to control the appliances, a monitoring operation device, and a plant monitoring program.

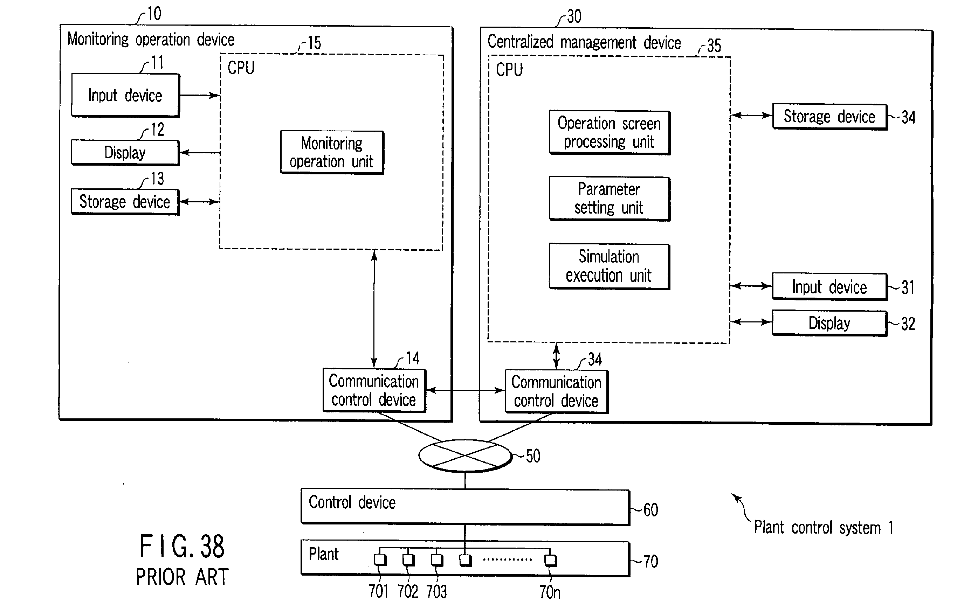

As depicted in FIG. 38, a plant 70 of a thermal power plant, a nuclear power plant, etc., includes a plurality of appliances 701-70n such as pumps and valves to be connected intricately. A control device 60 is connected to the plant 70. The control device 60 shown in FIG. 38 may include of a plurality of control devices. A control program is installed in advance in the control device 60. The control device 60 controls operations of each of the appliances 701-70n by running the control program. As shown in FIG. 38, a monitoring operation device 10 and a centralized management device 30 are connected to the control device 60.

The monitoring operation device 10 includes a monitoring operation unit which monitors and operates each device 701-70n of the plant 70 in response to operation requests input by an operator.

When a monitoring screen display request is input through an input device 11, the monitoring operation unit displays plant data transmitted from the control device 60 on the monitoring screen corresponding to the display request. When an operation request is input, the monitoring operation unit transmits the operation request to the control device 60. The control device 60 controls each appliance 701-70n in accordance with the control program depending on the operation request received from the monitoring operation device 10 and an input signal from the plant 70.

The centralized management device 30 is utilized by a plant control system provider, an end user maintenance department, and a maintenance provider to perform maintenance of the plant control system.

An operation screen processing unit of the centralized management device 30 may display a maintenance operation screen to install the control program into the control device 60 which has been accessed via a network 50, a maintenance operation screen to display the control program which has already been installed in the control device 60, or a maintenance operation screen to update the control program which has already been installed, on an input display 32 in response to an operation request. A parameter setting unit of the management device 30 varies parameter values which have been set to control each device 701-70n. Furthermore, a simulation execution unit of the management device 30 carries out simulation of arbitrary information contained within the control device 60.

Like this, conventionally, the plant monitoring system utilizes the monitoring operation device 10 and the centralized management device 30 and performs the monitoring operations for the plant and the operations for the control program through complicated operations. The monitoring operation device 10 and the centralized management device 30 exist as separated devices. For example, the plant operator was previously located within the monitoring operation device 10, and the centralized management device was installed in the maintenance room, which the maintenance provider, etc., entered if necessary.

Conventionally, to enhance the operability in a monitoring operation for the plant, a plant monitoring control device configured so as to display information relating to appliances caused by selection of appliance symbols to be displayed on a display by means of a touch operation using not only a key input but also a touch screen has been disclosed (refer to, e.g., Jpn. Pat. Appln. KOKAI Publication No. 10-320034).

As mentioned above, in the conventional plant control system, the monitoring operation device 10 carrying out the monitoring operations and the centralized operation device 10 carrying out the maintenance had previously been placed in a separate, independent configuration. Therefore, there has been a problem such that the operator cannot display the contents of the control program on the display 12 and cannot change parameter values from the monitoring operation device 10.

Meanwhile, as regards the monitoring operations, if the monitoring operation device 10 were able to refer to the control program to be run by the control device 60 or operate the control program, the conventional plant control system may be improved as regards the operability and maintainability for monitoring the plant 70.

According to an aspect of the present invention, there is provided a plant control system comprising a monitoring operation device, and a centralized management device to be connected to control device controlling appliances provided to a plant, wherein the monitoring operation device includes: a calling unit which transmits a request for requesting a transmission of maintenance screen data of a control program relating to the appliances to the centralized management device when identifiers uniquely granted to the appliances are selected; a maintenance screen generation unit which operates when the maintenance screen data and control program state value indicating a sate of the control program are received in response to the request from the centralized management device, and generates a maintenance screen by synthesizing the maintenance screen data and the control program state value; and a display processing unit which displays the maintenance screen on a display, and the centralized management device includes: a storage device which stores control device data including the control program state value; a storage device which stores the maintenance screen data corresponding to the control device data; and a maintenance screen processing unit which transmits the maintenance screen data corresponding to the appliances and the control program state value indicating the state of the control program to the monitoring operation device when the request is received from the monitoring operation device.

The invention can be more fully understood from the following detailed description when taken in conjunction with the accompanying drawings, in which:
FIG. 1 is a block diagram explaining a preferred configuration of a plant control system regarding a first embodiment of the invention;
FIG. 2 is an example of plant data to be used by a monitoring operation device regarding the first embodiment;
FIG. 3 is an example of screen number data to be used by the monitoring operation device regarding the first embodiment;
FIG. 4 is a flowchart explaining maintenance screen display processing regarding the monitoring operation device regarding the first embodiment;
FIG. 5 is an example of a monitor screen to be displayed on the monitoring operation device regarding the first embodiment;
FIG. 6 is another example of the monitor screen to be displayed on the monitoring operation device regarding the first embodiment;
FIG. 7 is an example of a maintenance screen displayed on the monitoring operation device regarding the first embodiment;
FIG. 8 is a flowchart showing an example of processing carried out by a centralized management device corresponding to the maintenance screen display processing explained in FIG. 4;
FIG. 9 is a block diagram depicting a configuration of a plant control system regarding a modified example of the first embodiment of the invention;
FIG. 10 is a block diagram depicting a configuration of a plant control system regarding a second embodiment of the invention;
FIG. 11 is a flowchart showing an example of parameter setting processing in a monitoring operation device regarding the second embodiment;
FIG. 12 is an example of a parameter setting window to be displayed on the monitoring operation device regarding the second embodiment;
FIG. 13 is a flowchart showing an example of processing carried out by a centralized management device corresponding to the parameter setting processing explained in FIG. 10;
FIG. 14 is a block diagram depicting a configuration of a plant control system regarding a third embodiment of the invention;
FIG. 15 is a flowchart showing an example of simulation processing in a monitoring operation device regarding the third embodiment;
FIG. 16 is an example of a simulation operation screen to be displayed on the monitoring operation device regarding the third embodiment;
FIG. 17 is a flowchart showing an example of processing carried out by a centralized management device corresponding to the simulation processing which explained in FIG. 15;
FIG. 18 is a block diagram showing a configuration of a monitoring operation device regarding a fourth embodiment of the invention;
FIG. 19 is an example of address data to be used in the monitoring operation device regarding the fourth embodiment;
FIG. 20 is a flowchart showing an example of a document display processing in the monitoring operation device regarding the fourth embodiment;
FIG. 21 is a block diagram showing a configuration of a monitoring operation device regarding a fifth embodiment of the invention;
FIG. 22 is an example of camera data to be used by the monitoring operation device regarding the fifth embodiment;
FIG. 23 is a flowchart showing an example of photographed image display processing in the monitoring operation device regarding the fifth embodiment;
FIG. 24 is a block diagram depicting a configuration of a monitoring operation device regarding a sixth embodiment of the invention;
FIG. 25 is an example of URL data to be used by the monitoring operation device regarding the sixth embodiment;
FIG. 26 is a flowchart showing an example of Web page display processing in the monitoring operation device regarding the sixth embodiment;
FIG. 27 is a block diagram depicting a configuration of a monitoring operation device regarding a seventh embodiment of the invention;
FIG. 28 is an example of graph data to be used by the monitoring operation device regarding the seventh embodiment;
FIG. 29 is a flowchart showing an example of trend graph display processing in the monitoring operation device regarding the seventh embodiment;
FIG. 30 is an example of a trend graph to be displayed on the monitoring operation device regarding the seventh embodiment;
FIG. 31 is a block diagram depicting a configuration of a monitoring operation device regarding an eighth embodiment of the invention;
FIG. 32 is a flowchart showing an example of event list display processing in the monitoring operation device regarding the eighth embodiment;
FIG. 33 is an example of en event list to be displayed on the monitoring operation device regarding the eighth embodiment;
FIG. 34 is a block diagram depicting a configuration of a monitoring operation device regarding a ninth embodiment of the invention;
FIG. 35 is an example of related appliance data to be used by the monitoring operation device regarding the ninth embodiment;
FIG. 36 is a flowchart showing an example of related data list display processing in the monitoring operation device regarding the ninth embodiment;
FIG. 37 is an example of the related data list to be displayed on the monitoring operation device regarding the ninth embodiment; and
FIG. 38 is a block diagram depicting a configuration of a conventional plant system.

Hereinafter, each embodiment of the present invention will be described with reference to the drawings. Components similar among embodiments are given identical or similar reference numerals.

### [First Embodiment]

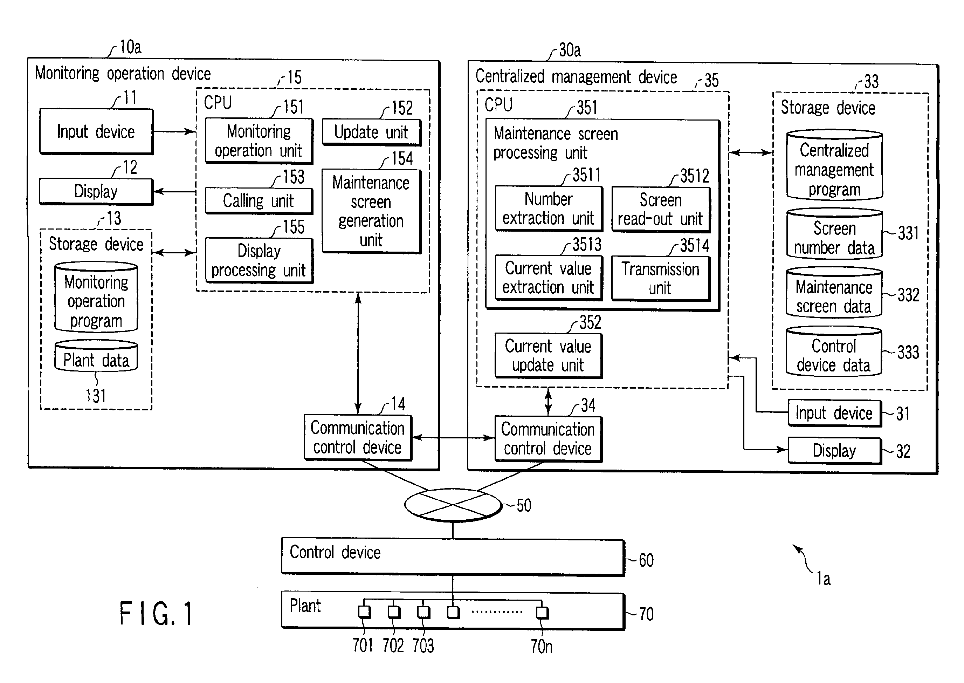

A plant control system 1a regarding the first embodiment of the invention includes, as shown in FIG. 1, a monitoring operation device 10a and a centralized management device 30a.

The operation device 10a and the management device 30a are connected to a control device 60 which controls a plurality of appliances 701-70n such as valves and pumps provided to a plant 70 via a network 50.

The control device 60 controls each operation of the appliances 701-70n through a control program installed in the control device 60 in advance to operate the plant 70. To control each device 701-70n, parameter values for each appliance 701-70n are set in the control program. When the control program is started in the control device 60, the control device 60 outputs control signals to each device 701-70n. Each of the appliances 701-70n carries out on and off operations etc., in accordance with the control signals input from the control device 60.

### (Monitoring Operation Device)

The monitoring operation device 10a is a device for monitoring and executing operations of the plant 70 via the network 50 and the control device 60. The operation device 10a is, as shown in FIG. 1, a personal computer, which includes an input device 11 such as a mouse and a keyboard, a display 12, a storage device 13, a communication control device 14, a central processing unit (CPU) 15, etc., and in which a monitoring operation program is installed. After the monitoring operation program stored in the storage device 13 is read out by means of the CPU 15, as depicted in FIG. 1, the monitoring operation device 10a provided with the CPU, which includes a monitoring operation unit 151, an update unit 152, a calling unit 153, a maintenance screen generation unit 154, and a display processing unit 155, is configured.

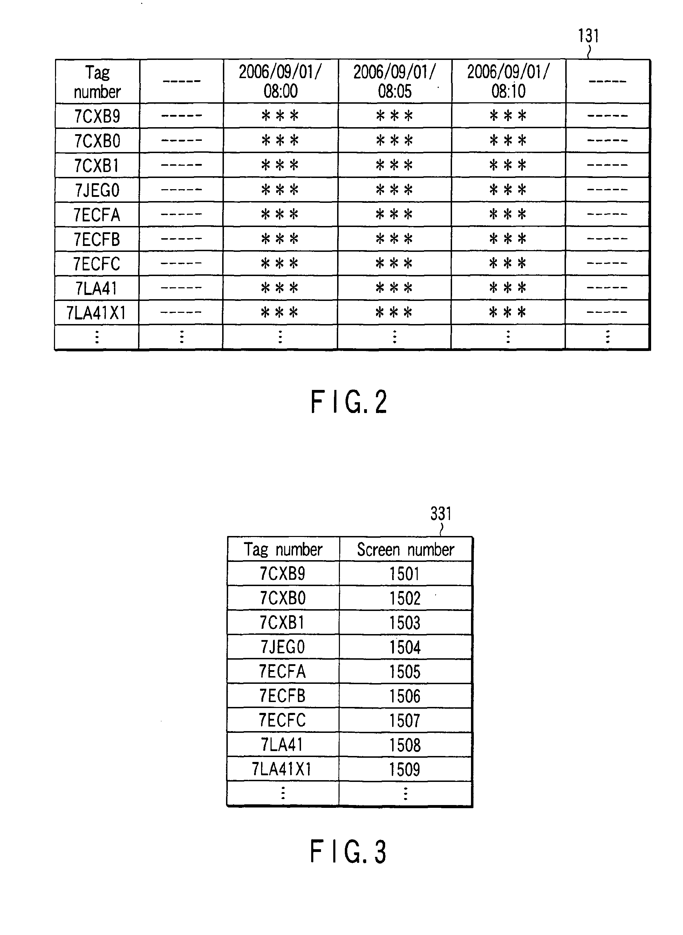

The storage device 13 stores plant data 131 as well as the monitoring operation program. The plant data 131 is data in which operations (events) of on and off operations of each of the appliances 701-70n, parameter values to be set in order to operate the appliances 701-70n and state values indicating current state values related to the states of each of the appliances 701-70n are associated with one another. The plant data 131 contains current data including current state values and history data including previous state values. The history data is, for example, as shown in FIG. 2, data to which state values etc., indicating the states of the appliances 701-70n at each time are related by using a tag number unique to each device 701-70n as a key.

The monitoring operation unit 151 executes processing relating to monitoring and operations of the plant 70 in accordance with the request input through the input device 11 by an operator. For example, the monitoring operation unit 151 outputs a request for executing a variety of kinds of processing to the display processing unit 155 or the maintenance screen generation unit 154 provided for the CPU 15.

The display processing unit 155 displays a variety of screens on the display 12 through prescribed software. For example, the display processing unit 155 reads out screen data (not depicted) stored in advance in the storage device 13 in accordance with a request for requesting the display of a monitoring screen of the plant which has been input from the monitoring operation unit 151. The display processing unit 155 displays a monitoring screen such as a system image screen systematically showing connections of each device 701-70n of the plant 70 and a list screen showing a list of data related to each device 701-70n on the display 12. The monitoring screen includes identifiers of the appliances such as symbols of appliances, names of appliances and tag numbers unique to the appliances.

The calling unit 153 transmits the request for requesting a transmission of screen data relating to the appliances 701-70n to the centralized management device 30a through the communication control device 14, when identifiers of the appliances are selected by the operator through the input device 11 from the monitoring screen displayed on the display 12. The request includes the tag numbers of the selected appliances.

The maintenance screen generation unit 154 synthesizes the maintenance screen data of the control program received from the centralized management device 30a via the communication control device and the current state value (current value) of the control program with the tag number transmitted from the calling unit 153 and generates the maintenance screen of the control program. The maintenance screen includes the state (current value) of the control program and may enable the operator to grasp the current state of the control program. The maintenance screen also may enable the operator to grasp the contents of the control program stored in the control device 60. The operator may change parameter values, etc., which have been set through the control program of the control device 60, via the maintenance screen.

The display processing unit 155 displays the maintenance screen generated from the maintenance screen generation unit 154 on the display 12.

The update unit 152 transmits a request for requesting the transmission of an "event" carried out by each device 701-70n and a "state value" indicating the state of each device 701-70n to the control device 60 through the communication control device 14. The update unit 152 acquires an "event" and a "state value" of each device 701-70n from the control device 60. The update unit 152 associates the tag numbers and the current time with the acquired "event" and "state value" to update the plant data 131. The "sate value" is, for example, a value indicating an opening degree of a valve if each of the appliances 701-70n is the valve. For example, if each of the appliances is the pump, the "state value" is a value indicating a starting state and a stopping state of the pump. The "state value" to be displayed is always updated into the latest value during the display of the maintenance screen.

### (Centralized Management Device)

The centralized management device 30a is, as illustrated in FIG. 1, a personal computer which includes an input device 31 such as a mouse and a keyboard, a display 32, a storage device 33, a communication control device 34, a CPU 35, etc., and in which a centralized management program is installed. As illustrated in FIG. 1, the centralized management program stored in the storage device 33 is read out by means of the CPU 35, which configures the centralized management device 30a provided with a maintenance screen processing unit 351 and a current value update unit 352.

The storage device 33 has stored screen number data 331, maintenance screen data 332 and control device data 333. The screen number data 331 is, as shown in FIG. 3, data that associates the tag numbers with screen numbers identifying the maintenance screen data to be used for generating the maintenance screen relating to the appliances 701-70n with the tag numbers granted thereto. The maintenance screen data 332 is data to be used for generating the maintenance screen to be identified by the screen numbers, and is, for example, graphic data and text data to be used for generating the maintenance screen relating to each device 701-70n. The control device data 333 is data which associates the current state values (current values) of the control program.

The maintenance screen processing unit 351 displays the maintenance screen on the display 32 of the centralized management device 30a. The processing unit 351 provides data necessary for generating the maintenance screen to the operation device 10a in response to the request for requesting the transmission of the data received from the monitoring operation device 10a. To provide the data to the operation device 10a, as shown in FIG. 1, the processing unit 351 includes a number extraction unit 3511, a screen read-out unit 3512, a current value extraction unit 3513, and a transmission unit 3514.

The number extraction unit 3511 extracts the screen numbers to be associated with the tag numbers from the screen number data 331, when a request including the tag number transmitted from the monitoring operation device 10a is received by the communication control device 34. The screen read-out unit 3512 reads out the maintenance screen data 332 to be identified by the screen numbers extracted through the number extraction unit 3511 from the storage device 33. The current value extraction unit 3513 extracts the current values to be associated with the tag numbers from the control device data 333. The current value extraction unit 3513 extracts the current values to be associated with the tag numbers from the control device data 333. The transmission unit 3514 transmits the maintenance screen data which has been read out by the screen read out-unit 3512 and the current values which has been extracted from the current value extraction unit 3513 to the monitoring operation device 10a through the communication control device 34.

The current value update unit 352 transmits a request for requesting transmissions of new current values at each device 701-70n to the control device 60 via the communication control device 34. When the communication control device 34 receives the new current values transmitted from the control device 60, the current value update unit 352 updates the current values of the control device data 333 into the new current values. The update processing performed by the current value update unit 352 always updates the control device data 333 into the latest current values.

### (Maintenance Screen Display Processing)

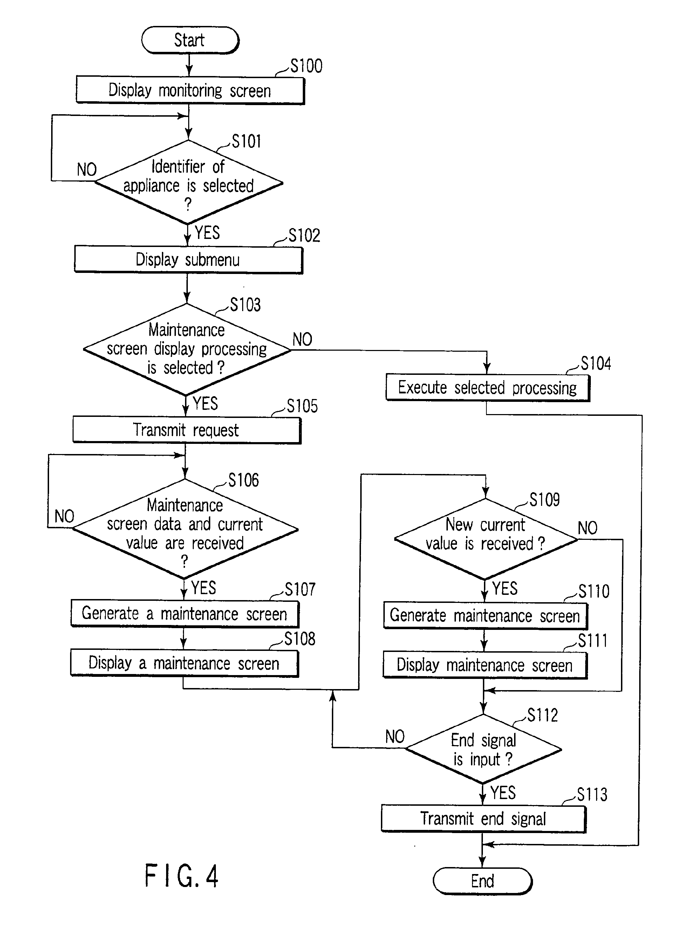

The maintenance screen display processing carried out by the monitoring operation device 10a of the plant control system 1a regarding the first embodiment of the invention will be described with reference to the flowchart illustrated in FIG. 4.

Firstly, as illustrated in FIG. 4, the display processing unit 155 displays the monitoring screen on the display 12 on the basis of the monitoring screen data (not illustrated) stored in the storage device 13 (Step S100). After this, the calling unit 153 waits for inputs of identifiers of the appliances to be selected by the operator (Step S101). When the identifiers of the appliances are input (Yes, in Step S101), the display processing unit 155 displays an option display unit that is a submenu as a pop-up display on the monitoring screen (Step S102). The operation device 10a prompts the operator to select the processing to be carried out later by displaying the option display unit by means of the display processing unit 155.

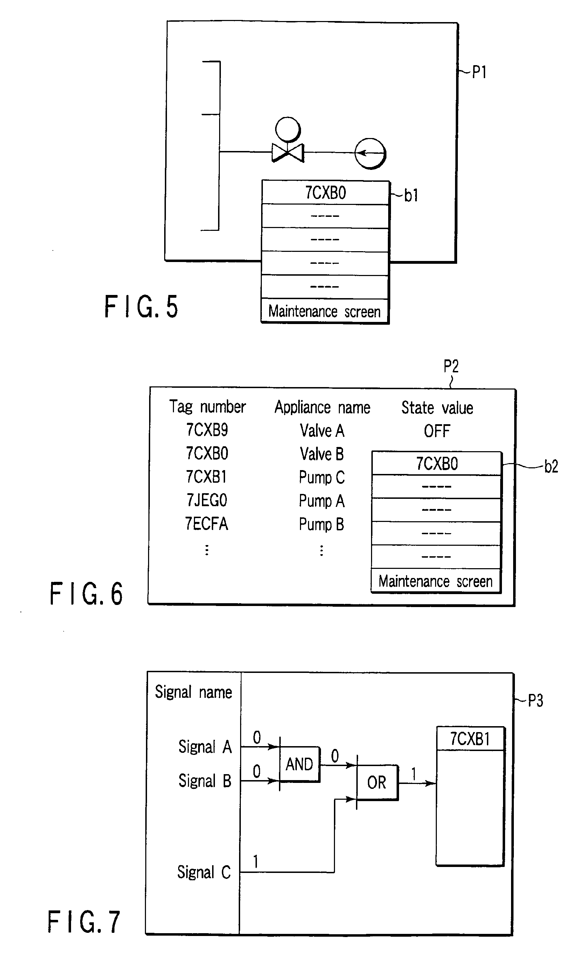

An example in which the identifiers of the appliances are selected from the monitoring screen and the option display unit is displayed will be described by referring to FIG. 5 and FIG. 6. If the monitoring screen is a system image screen P1, when the identifiers of the appliances included in the screen P1, an option display unit b1 is displayed in the screen P1, as illustrated in FIG. 5. If the monitoring screen is a list screen P2, when the identifiers of the appliances are including in the list screen P2, an option display unit b2 is displayed in the list screen P2, as illustrated in FIG. 6.

When the processing other than the maintenance screen display processing is selected from among the processing included in the option display unit (No, in Step S103), the monitoring operation device 10a carries out the selected processing (S104). In the first embodiment, the description about other processing will be omitted.

When the maintenance screen display processing is selected from among the processing included in the option display unit (Yes, in Step S103), the calling unit 153 transmits a request for requesting the transmission of the maintenance screen and the current values of the appliances selected in Step S101 to the centralized management device 30a (Step S105). The request includes the tag numbers of the appliances selected in Step S101. The user may execute one click operation for the processing from the selection of the identifiers indicating the appliances up to the selection of the screen display processing shown in Steps S101-S103.

When receiving the maintenance screen data and the current values from the centralized management device 30a (Yes, in Step S106), the maintenance screen generation unit 154 synthesizes the maintenance screen data and the current values to generate the maintenance screen (Step S107). After this, the display processing unit 155 displays the maintenance screen on the display 12 (Step S108).

In Step S108, a maintenance screen P3 to be displayed on the display 12 displays, as shown in FIG. 7, connection lines among the appliances selected in Step S101 and the appliances related to the selected appliances by using symbols of AND/OR. The maintenance screen generation unit 154 generates the maintenance screen P3 showing the state of each line by prescribed colors and numeric values.

After this, when receiving the updated current values from the centralized management device 30a (Yes, in Step S109), the maintenance screen generation unit 154 synthesizes the maintenance screen received in Step S106 and the current values received in Step S109 to generate a new maintenance screen (Step S110). The display processing unit 155 displays the new maintenance screen on the display 12 (Step S111). Thereby, the display 12 displays the maintenance screen including the current state values in real time.

The maintenance screen generation unit 154 and the display processing unit 155 repeat the processing from Steps S109 to S111 to display the newly generated maintenance screen on to the display 12 until an end signal is input by the operator (Step S112). On the other hand, if the end signal is input (Yes, in Step S112), the calling unit 153 transmits the end signal to the management device 30a to end the maintenance screen display processing (Step S113).

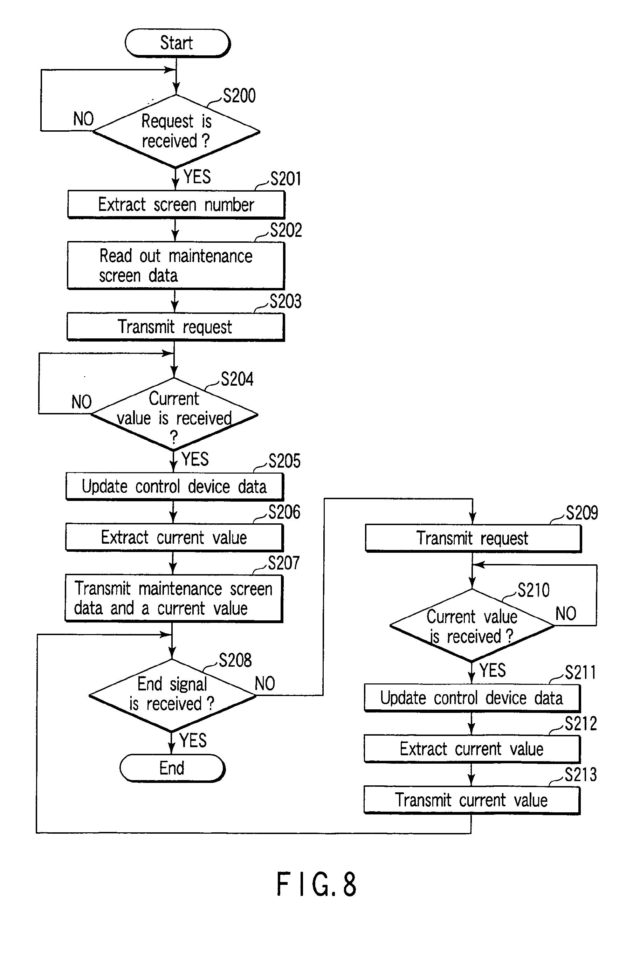

Next, by referring to the flowchart illustrated in FIG. 8, the processing carried out in response to the foregoing maintenance screen display processing will be explained with reference to FIG. 4 in the centralized management device 30a regarding the first embodiment of the invention.

At first, when the request for requesting the transmission of the maintenance screen data and the current values (Step S200) is sent, the number extraction unit 3511 extracts the screen numbers to be associated with the tag numbers included in the received request (Step S201). Next, the screen read-out unit 3512 reads out the maintenance screen data 332 identified by the screen numbers which have been extracted by means of the number extraction unit 3511 from the storage device 33 (Step S202).

The current value update unit 352 transmits the request for requesting the transmission of the current values of the appliances to the control device 60 (Step S203). When receiving the current values transmitted from the control device 60 (Yes, in Step S204), the current value update unit 352 updates the control device data 333 with the received current values (Step S205).

The current value extraction unit 3513 then extracts the current values to be associated with the tag numbers included in the request received in Step S200 (Step S206). The transmission unit 3514 transmits the maintenance screen data read out in Step S202 and the current values extracted in Step S206 (Step S207).

If the centralized management device 30a has received the end signal from the monitoring operation device 10a (Yes, in step 208), the processing in the management device 30a also ends.

On the contrary, if the management device 30a has not received the end signal (No, in Step S208), the current update unit 352 transmits again the request for requesting the transmission of the current values of the appliances to the control device 60 (Step S209). When receiving the current values transmitted from the control device 60 (Yes, in Step S210), the current value update unit 352 updates the control device data 333 again by the received current values (Step S211). Successively, the current value extraction unit 3513 extracts the current values from the control device data 333 (Step S212). The transmission unit 3514 transmits the current values extracted in Step S212 (Step S213). After this, the centralized management device 30a repeats Steps S208 to S213 until it receives the end signal from the monitoring operation device 10a.

As mentioned above, according to the plant control system 1a regarding the first embodiment, since the system 1a is configured so that the centralized management device 30a provides the maintenance screen data in response to the request from the monitoring operation device 10a, the display 12 of the monitoring operation device 10a to be used by the operator may display the maintenance screen which could only conventionally be displayed on the display of the centralized management device. Therefore, the operator as well as a plant control system provider or a maintenance provider may grasp the control program to be carried out by the control device 60 in order to control the appliances 701 to 70n provided to the plant 70.

### (Modified Example of First Embodiment)

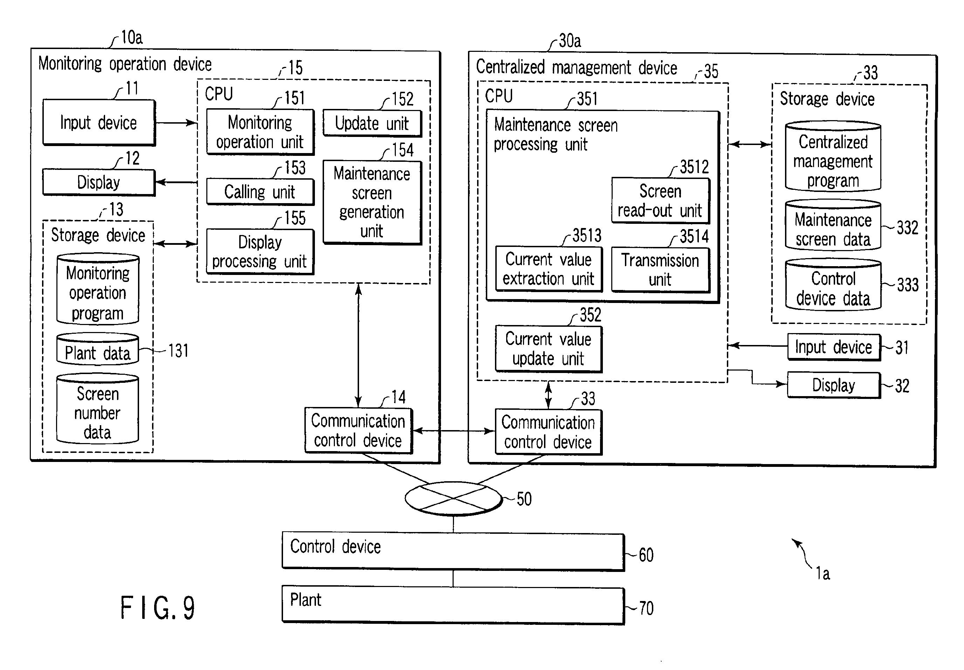

In the plant control system 1a regarding the foregoing first embodiment, the centralized management device 30a includes the number extraction unit 3511 in the maintenance screen processing unit 351, and also it makes the storage device 33 store the screen number data 331. As for a modified example of the plant control system 1a regarding the first embodiment, as shown in FIG. 9, a configuration in which the centralized management device 30a does not include the number extraction unit 3511, and the storage device 13 in the monitoring operation device 10a is made to store the screen number data, and the calling unit 153 includes the number extraction unit 3511, is a possible approach.

In the plant control system regarding the modified example, the calling unit 153 of the operation device 10a transmits the screen numbers extracted from the number extraction unit 3511 instead of the tag numbers as the request. Although the screen read-out unit 3512 of the management device 30a reads out the maintenance screen data identified by the screen numbers received from the monitoring operation device 10a, other points are the same as those of the first embodiment.

### [Second Embodiment]

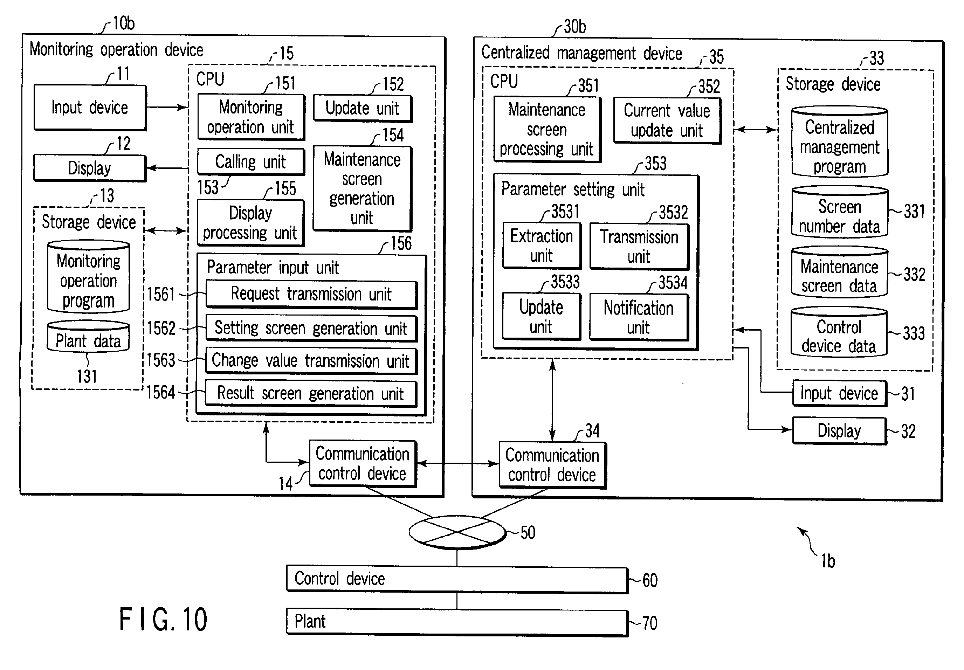

A plant control system 1b regarding the second embodiment of the invention includes, as depicted in FIG. 10, a monitoring operation device 10b and a centralized management device 30b. The monitoring operation device 10b and the centralized management device 30b are connected to the control device 60 via the network 50. In the plant control system 1b regarding the second embodiment, the monitoring operation device 10b may change the parameter values which have been set to control the appliances provided to the plant 70 into new setting values. For example, the monitoring operation device 10b may change the parameter values which have been set in order to adjust the opening/closing of valves if the appliances are the valves. Furthermore, for example, the monitoring operation device 10b may change the parameter values which have been set to control pumps, if the appliances are the pumps, into new setting values.

### (Monitoring Operation Device)

The monitoring operation device 10b is, as shown in FIG. 10, different from the monitoring operation device 10a shown in FIG. 1 in that the operation device 10b includes a parameter input unit 156 to change parameter values which have been set in order to control appliances.

The parameter input unit 156 includes a request transmission unit 1561, a setting screen generation unit 1562, a change value transmission unit 1563 and a result screen generation unit 1564.

When identifiers of the appliances are selected via the input device 11 by the operator, and a request for changing the parameters values which have been set in order to control appliances are input, the request transmission unit 1561 transmits a request for requesting the transmission of the current parameter values to the centralized management device 30b via the communication control device 14. The request includes the tag numbers or the circuit numbers of the selected appliances.

When receiving the current parameter values from the centralized management device 30b for the transmitted request, the setting screen generation unit 1562 generates a setting screen to prompt inputs of change values for the parameter values. The display processing unit 155 displays the setting screen generated from the setting screen generation unit 1562 on the display 12. The setting screen is a screen which prompts the operator to change the set parameter values.

When change values are input by the operator via the input device 11, the change values transmission unit 1563 transmits the change values to the centralized management device 30b via the communication control device 14. The result screen generation unit 1564 generates the result screen on the basis of the setting result received from the centralized management device 30b. The display processing unit 155 displays the result screen generated from the result screen generation unit 1564 on the display 12.

### (Centralized Management Device)

The centralized management device 30b regarding the second embodiment is different, as shown in FIG. 10, from the centralized management device 30a in that the management device 30b is provided with a parameter setting unit 353 which changes parameter values which are set in order to control appliances in response to a request for setting parameter values from the monitoring operation device 10b. The control device data 333 stored in the storage device 33 of the centralized management device 30b regarding the second embodiment associates the current parameters in addition to the tag numbers, the circuit numbers and the current values.

The parameter setting unit 353 changes the parameter values which have been set in the control program of the control device 60 in accordance with the request input from the input device 31. The parameter setting unit 353 changes the parameter values which have been set in the control program of the control device 60 in accordance with the request input via the communication control device 14. To change the parameter values, the parameter setting unit 353 includes an extraction unit 3531, a transmission unit 3532, an update unit 3533 and a notification unit 3534.

When receiving a parameter display request from a monitoring operation device 10b via the communication control device 34, the extraction unit 3531 extracts current parameter values of appliances or circuits from the control device data 333.

The transmission unit 3532 transmits the parameter values extracted from the extraction unit 3531 to the monitoring operation device 10b through the communication control device 34.

When the control device 34 inputs the change values received from the monitoring operation device 10b, the update unit 3533 transmits the change values as new parameter values to the control device 60 through the control device 34. The update unit 3533 updates the parameter values of the control device data 333 into the received change values.

The notification unit 3534 transmits the current values with the newly set parameter values which have been updated by the control device data 333 to the monitoring operation device 10b via the communication control device 34 together with an update completion notification.

### (Parameter Setting Processing)

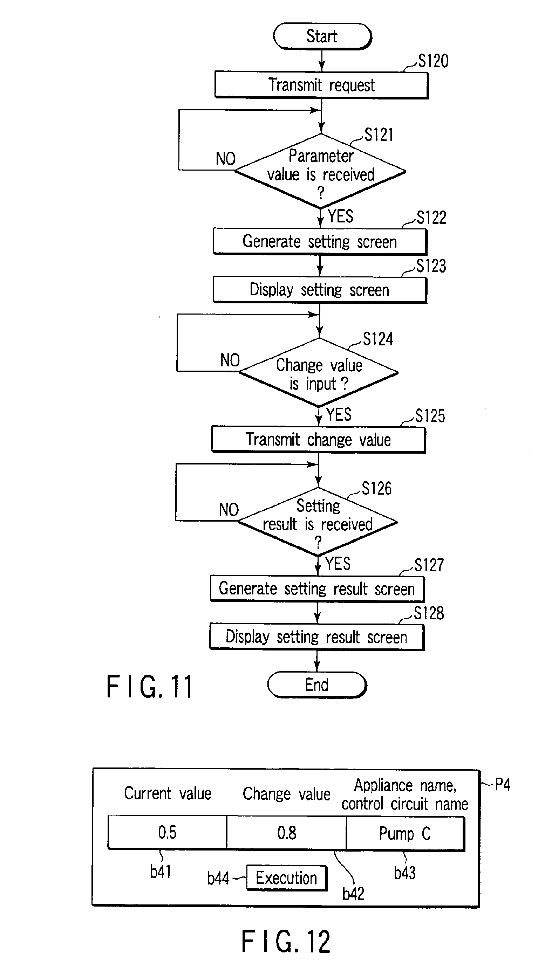

Parameter setting processing carried out by the monitoring operation device 10b will be described with reference to a flowchart shown in FIG. 11. The parameter setting processing is carried out at the same timing at which the request for requesting the setting of the parameter values during the display of the maintenance screen in Step S108 or Step S111 of the flowchart shown in FIG. 4 is sent.

During the display of the maintenance screen on the display 12, the operator selects the appliances to be objects, and inputs the request for requesting the change in parameter values. Thereby, the request transmission unit 1561 transmits a request for requesting the transmission of the current parameters to the centralized management device 30b (Step S120). The request includes the tag numbers of the selected appliances, or the circuit numbers of the control circuits related to the selected appliances.

When receiving the parameter values which are currently set from the centralized management device 30a in response to the transmitted request (Yes, in Step 121), the setting screen generation unit 1562 generates the setting screen including the received parameter values (Step S122). The display processing unit 155 displays a setting screen P4 on the display 12 (Step S123).

The setting screen P4 includes, as shown in FIG. 12, a current parameter value of an appliance or a control circuit to be indicated by a name display unit b43 in a display unit b41. The setting screen P4 includes an input unit b42 to which a change value is input by referring to a current parameter value to be displayed on the display unit B41. When an execution button b44 is depressed after inputting the change value in an input unit b42, the parameter value of the corresponding device is set to the change value.

The example of the setting screen P4 shown in FIG. 12 shows an example in which a parameter value of a pump C is changed from '0.5' to '0.8' when the execution button b44 is depressed. While an example in which only one parameter of the pump C is changed is shown in the setting screen P4 shown FIG. 12, the setting screen P4 may includes input units b42 of a plurality of appliances so as to change a plurality of parameter values.

If the operator inputs the change value to the input unit b42, and also depresses the execution button b44 (Yes, in Step S124), the change value transmission unit 1563 transmits the request for requesting the change in parameter value to the centralized management device 30a (Step S125). The request includes the change value and also the identifier of the parameter to be changed.

After this, when receiving the setting result with respect to the transmitted change value (Yes, in Step S126), the result screen generation unit 1564 generates the result screen, based on the received setting result (Step S127).

After this, the display processing unit 155 displays the result screen generated from the result screen generation unit 1564 on the display 12, and ends the parameter setting processing (Step S128).

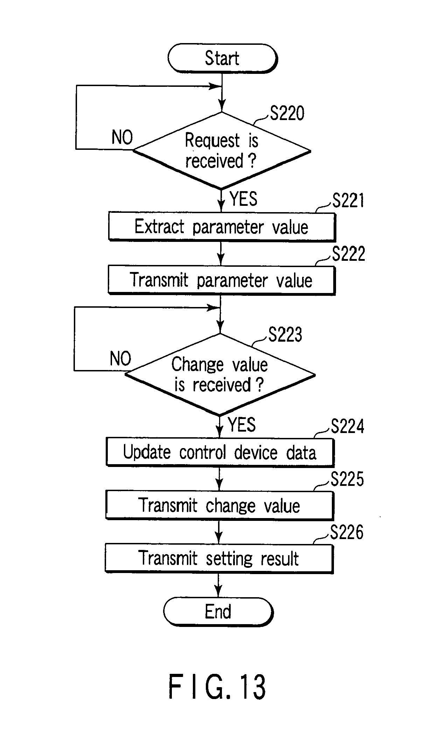

The following will describe the processing to be carried out corresponding to the parameter setting processing of FIG. 11 in the centralized management device 30b regarding the second embodiment of the invention by referring to a flowchart depicted in FIG. 13.

When firstly receiving a request for requesting a transmission of a current parameter value from the monitoring operation device 10b (Yes, in Step S220), the extracting unit 3531 extracts the parameter value, which is currently set and is associated with a tag number or a circuit number included in the request, from the control device data 333 (Step S221).

The transmission unit 3532 transmits the parameter value extracted by the extraction unit 3531 to the monitoring operation device 10b (Step S222).

Next, when receiving the change value from the monitoring operation device 10b (Yes, in Step S223), the update unit 3533 updates the parameter value in the control device data 333 by the received change value (Step S224). The update unit 3533 transmits the received change value as a request for requesting the change of the parameter value to the control device 60 (Step S225).

The control device 60 which has received the request from the monitoring operation device 10b sets a parameter value which has been set so as to control the appliances by the received change value.

The notification unit 3534 then transmits a new current value of the control device data 333 as the notification of the setting result to the monitoring operation device 10b (Step S226).

The plant control system 1b regarding the aforementioned second embodiment may change the setting value, which sets the parameter of the appliance in the control program to control the plant 70, by means of the monitoring operation device 10b to be used by the operator.

### [Third Embodiment]

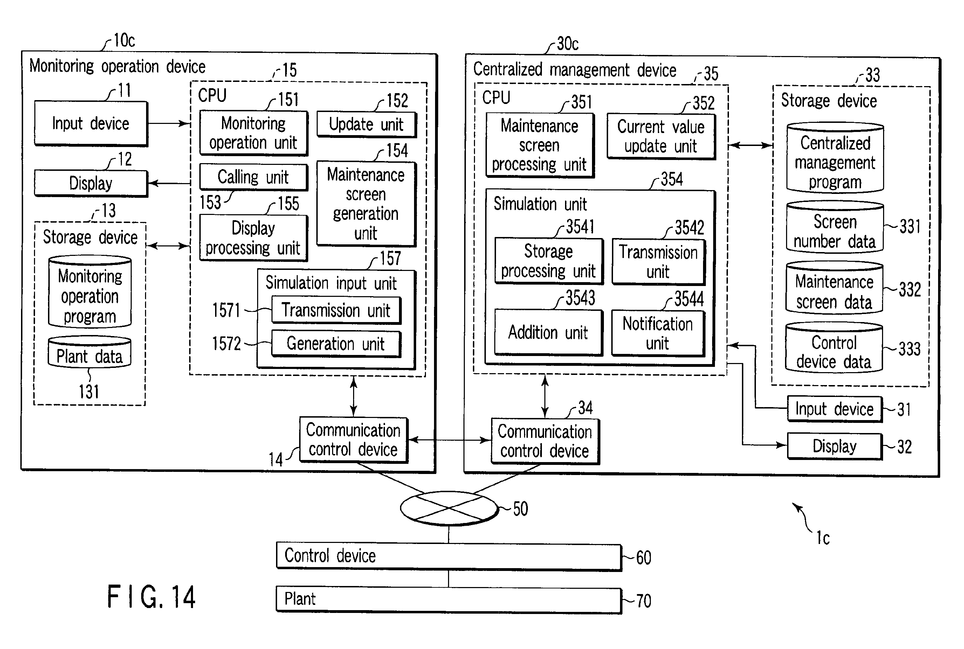

A plant control system 1c regarding the third embodiment of the invention is provided, as depicted in FIG. 14, with a monitoring operation device 10c and a centralized management device 30c. The monitoring operation device 10c and the centralized management device 30c are connected to the control device 60 via the network 50. The operation device 10c in the control system 1c regarding the third embodiment may display the result of a simulation of an arbitrary state value of the control program, which controls the appliances 701-70n provided to the plant 70, on the display 12.

### (Monitoring Operation Device)

The monitoring operation device 10c differs from the monitoring operation device 10a depicted in FIG. 1 in that the operation device 10c is provided with a simulation input unit 157 to simulate the arbitrary state value of the control program. The simulation input unit 157 includes a transmission unit 1571 and a generation unit 1572. The simulation of the state value is utilized for the case of failure or testing of appliances, or to temporarily reprogram appliances.

When a request for requesting the simulation of the arbitrary state value of the control program is input, the display processing unit 155 of the operation device 10c displays an input screen to prompt the input of a simulation value corresponding to the state value on the display 12.

When the simulation value in simulating the change of the state value is input, the transmission unit 1571 transmits a request for requesting the execution of the simulation to the centralized management device 30c via the communication control device 14. The control device 14 receives the simulated state value as a simulation result from the management device 30c.

The generation unit 1572 generates a result screen showing the simulation result received by the control device 14. The display processing unit 155 displays the result screen generated from the generation unit 1572 on the display 12.

### (Centralized Management Device)

The centralized management device 30c regarding the third embodiment differs, as shown in FIG. 14, from the centralized management device 30b in that the management device 30c includes a simulation unit 354 which obtains the simulation result and provides it to the management device 10c in response to the request therefrom. To obtain the simulation result, the simulation unit 354 includes a storage processing unit 3541, a transmission unit 3542, an addition unit 3543 and a notification unit 3544.

Upon receiving the request for requesting the execution of the simulation via the communication control device 34, the storage processing unit 3541 stores the simulation value included in the request in addition to the control device data 333 in the storage device 33.

The transmission unit 3542 transmits the simulation value to the control device 60 via the control device 34. The control device 34 receives a simulated value related to the simulation value from the control device 60.

The addition unit 3543 stores the simulated value in addition to the control device data 333 in the storage device 33.

The notification unit 3544 transmits the simulated value as a simulation result to the monitoring operation device 10c through the control device 34.

### (Simulation Processing)

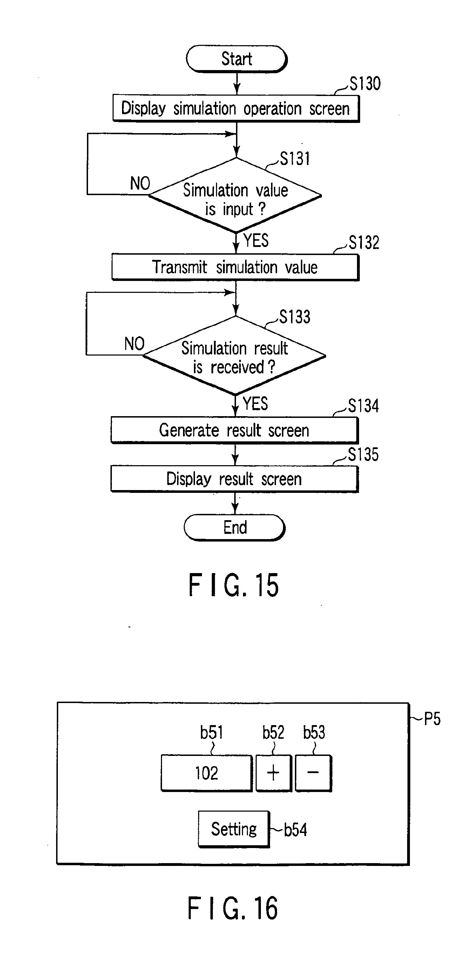

The simulation processing to be carried out by the monitoring operation device 10c in the case in which the request for requesting the execution of the simulation is input during the display of the maintenance screen in Step S108 or S111 of the flowchart shown in FIG. 4 will be described with reference to a flowchart shown in FIG. 15.

At first, during the display of the maintenance screen on the display 12, when the appliances or the control circuits are selected and the request for requesting the execution of the simulation is input by the operator, the display processing unit 155 displays a simulation operation screen on the display 12 on the basis of the screen data pre-stored in the storage device (Step S130).

A simulation execution screen P5, as illustrated in FIG. 16, includes an input unit b51 to input a simulation value for obtaining a simulation result to change the parameter values of the selected appliances. The simulation execution screen P5 includes a change button b52 to increase or a change button b53 to decrease the value which has been input in the input unit b51. If the execution button b54 is depressed after the input of the simulation value in the input unit b51, the simulation is carried out by means of the simulation value.

If the simulation value is input and the execution button is depressed by the operator (Yes, in Step S131), the transmission unit 1571 transmits the simulation value to the centralized management device 30c (Step S132).

After this, if the simulation result is received (Yes, in Step S133), the generation unit 1572 generates a result screen on the basis of the received simulation result (Step S134), and the display processing unit 155 displays the result screen on the display 12 to end the processing (Step S135).

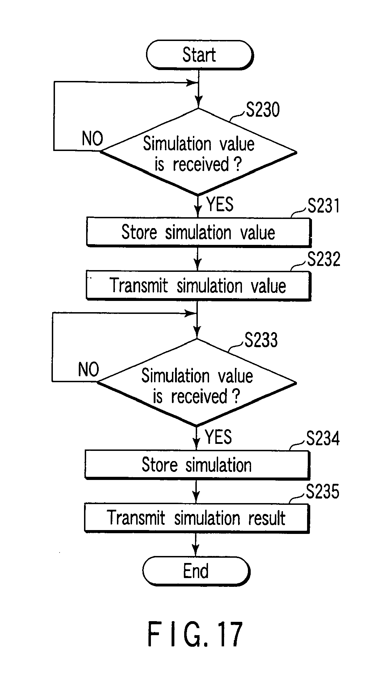

The following will describe the processing to be carried out corresponding to the simulation processing of FIG. 15 in the centralized management device 30c regarding the third embodiment of the invention with reference to a flowchart illustrated in FIG. 17.

When firstly receiving the simulation value from the monitoring operation device 10c (Step S230), the storage processing unit 3541 adds the received simulation value and stores it therein (Step S231). The transmission unit 3542 transmits the received simulated value to the control device 60 (Step S232).

When receiving the simulated value with respect to the transmitted simulation value from the control device 60 (Yes, in Step S232), the addition unit 3543 stores the received simulated value in the control device data 333 (Step S234). The notification unit 3544 transmits the received simulated value as the simulation result to the monitoring operation device 10c to end the processing (step S235).

As given above, in the plant control system 1c regarding the third embodiment, the operator may simulate the arbitrary state value which has been set in order to adjust the appliances 701-70n of the plant 70 through the control program by means of the monitoring operation device 10c.

### [Fourth Embodiment]

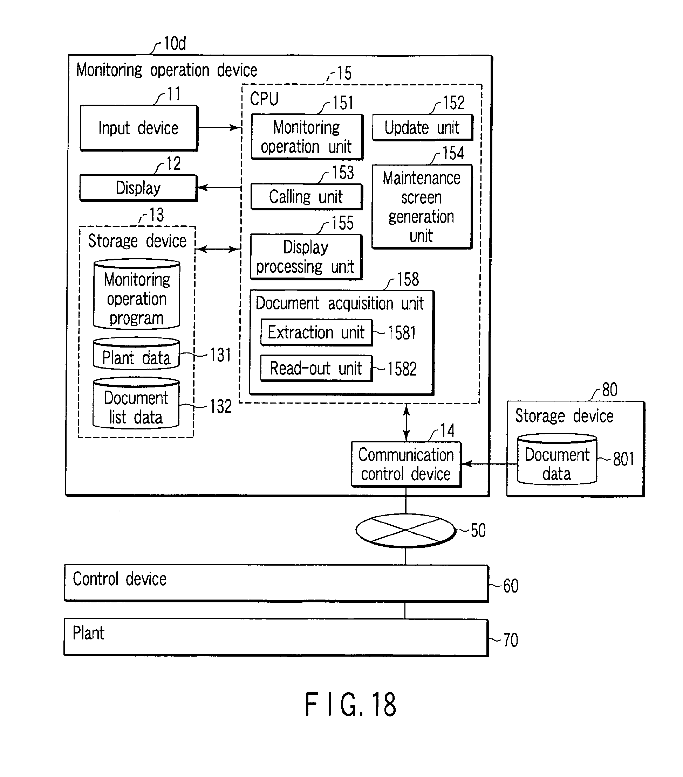

A monitoring operation device 10d regarding the fourth embodiment of the invention may easily display necessary document data on the display 12. The necessary document data is, for example, data of instruction manuals relating to the appliances and of histories, etc., relating to previous maintenances of the appliances. The document data is not limited to text data, and may be electronic data including image data, etc. Document data 801 is, as shown in FIG. 18, stored in a storage device 80 to be connected to the monitoring operation device 10d.

The operation device 10d is connected to the control device 60 via the network 50 as shown in FIG. 18. The operation device 10d is connected to the storage device 80, and includes a document acquisition unit 158 acquiring the document data 801 to be stored in the storage device 80.

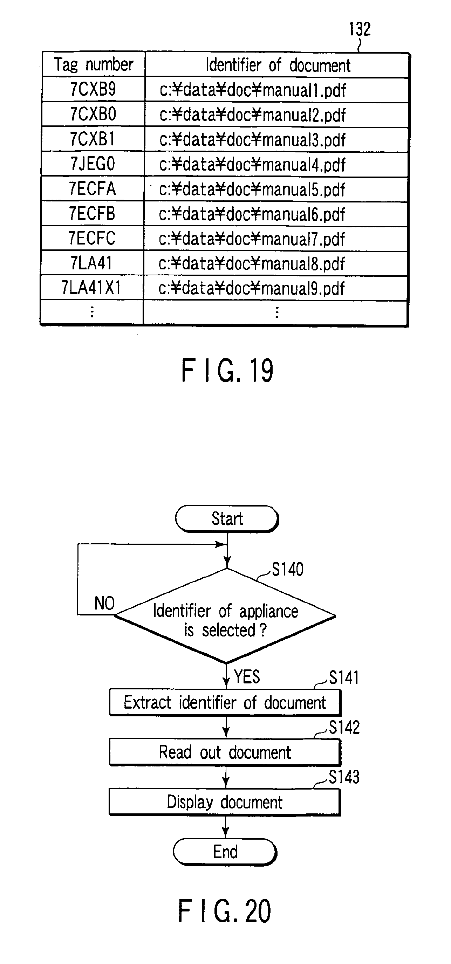

The acquisition unit 158 includes an extraction unit 1581 and a read-out unit 1582 in order to acquire the document data 801. The storage device 13 of the monitoring operation device 10d has stored document list data 132 for use in the document acquisition unit 158. The list data 132 is, as shown in FIG. 19, data in which tag numbers and identifiers of the documents relating to the appliances to which the tag numbers are granted are associated with one another.

When identifiers of the appliances with the tag numbers granted thereto are selected and a read request for the document is input, the extraction unit 1581 extracts the identifiers of the document to be associated with the tag numbers from the document list data 132.

The read-out unit 1582 reads out the document data 801 to be identified by the identifier of the document extracted by the extraction unit 1581 from the storage device 80. The display processing unit 155 displays the read-out document data 801 on the display 12.

### (Document Display Processing)

The document display processing carried out by the monitoring operation device 10d will be described by referring to a flowchart illustrated in FIG. 20. The document display processing is carried out by the monitoring operation device 10d, for example, during the display of the monitoring screen in Step S100 of the flowchart depicted in FIG. 4, if the identifiers of the appliances are selected and the request for requesting the display of the document data is input.

If the identifiers of the devices are selected and the request for requesting the display of the document is input (Yes, in Step S140), the extraction unit 1581 extracts the identifier of the document to be associated with the tag numbers granted to the appliances from the document list data 132 (Step S141).

The read-out unit 1582 then reads out the document of the identifier extracted from the storage device 80 (Step S142).

Successively, the display processing unit 155 utilizes prescribed software to display the read-out document data on the display 12 (Step S143).

According to the monitoring operation device 10d regarding the fourth embodiment of the invention, a necessary document may be displayed on the display 12 with one action from the monitoring screen.

### [Fifth Embodiment]

A monitoring operation device 10e regarding the fifth embodiment of the invention may easily display photographed images in which aspects of the appliances 701-70n in the plant 70 are photographed.

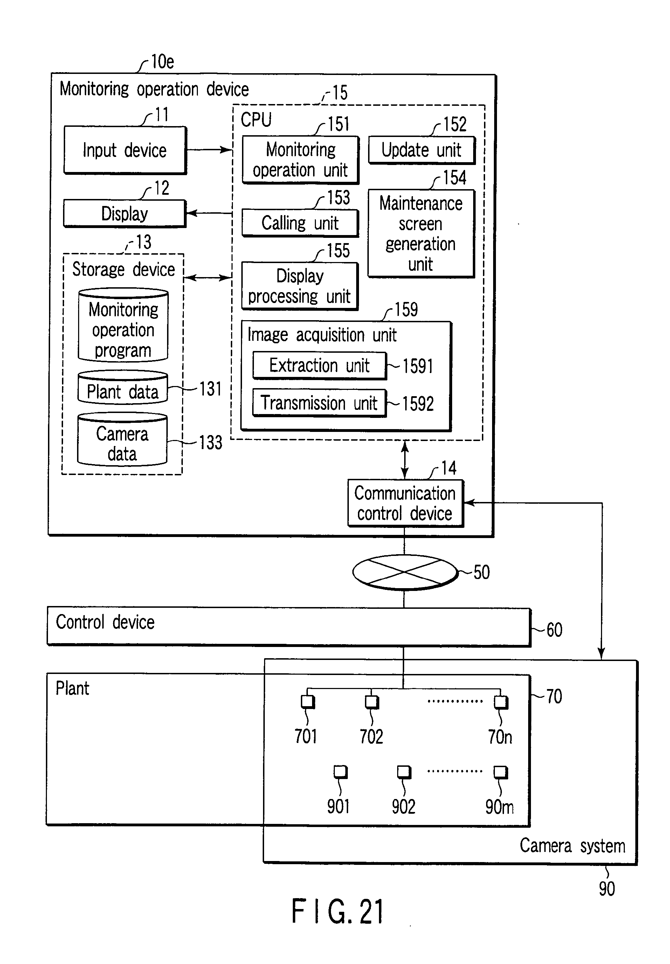

The operation device 10e is, as shown in FIG. 21, connected to the control device 60 via the network 50. The operation device 10e is connected to a camera system 90. The camera system 90 includes cameras 901-90m to photograph each device 701-70n in the plant 70. Each camera 901-90m is installed at a prescribed position from which each device 701-70n in the plant 70 may be photographed. The number of cameras provided to the camera system 90 need not be the same as the number of appliances provided to the plant 70, and by changing the direction of each camera 901-90m by means of a drive device (not shown) provided to the camera system 90, the camera system 90 makes it possible to photograph the appliances to be image-monitored.

The image acquisition unit 159 includes an extraction unit 1591 and a transmission unit 1592.

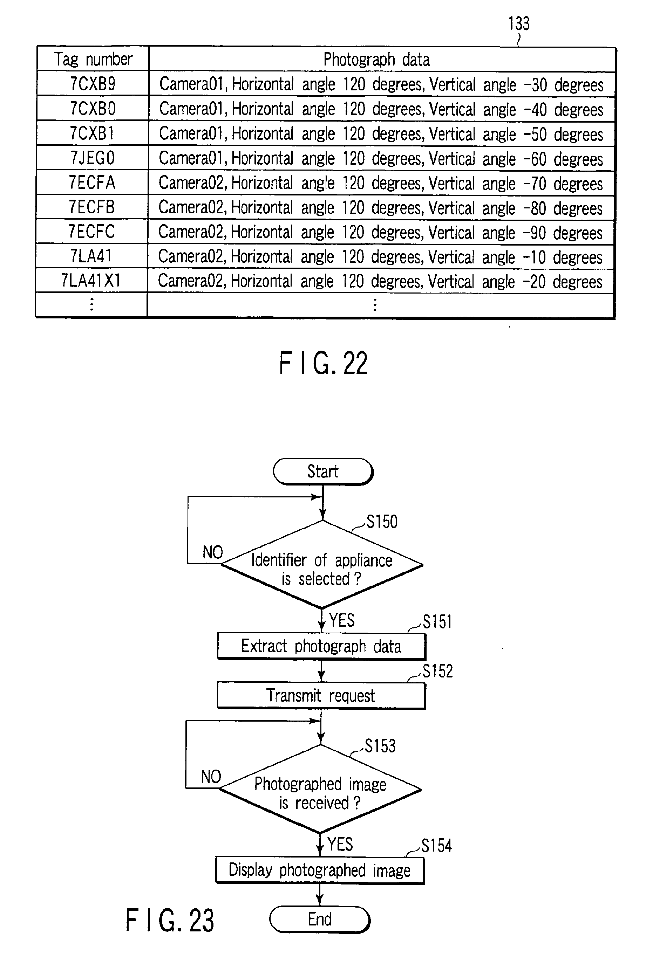

When the tag numbers are selected and the request for requesting the display of the photographed images is input, the extraction unit 1591 extracts photographing data to be associated with the tag numbers from the camera data 133. The camera data 133 is, as illustrated in FIG. 22, the data in which the tag numbers, the identifiers of the cameras and the photographing data including angles of the cameras (angels of cameras to photograph thereby) are associated with one another. For example, the appliance granted '7CXB9' as a tag number is photographed when the camera with an identifier 'Camera 01' is set at a horizontal angle of 120 degrees and a vertical angle of -30 degrees.

The transmission unit 1592 transmits an image request including image data extracted from the extraction unit 1591 to the camera system 90 via the communication control device 14. The display processing unit 155 displays the photographed images received through the control device 14 from the camera system 90 on the display 12.

### (Photographed Image Display Processing)

The photographed image display processing to be carried out by the monitoring operation device 10e will be described by referring to a flowchart illustrated in FIG. 23. The image display processing is carried out by the monitoring operation device 10e, for example, in the case in which the identifiers of the appliances are selected and the request for requesting the display of the photographed images is input during the display of the monitoring screen in Step S100 of the flowchart depicted in FIG. 4.

If the identifiers of the appliances are selected and the request for requesting the display of the photographed images is input (Step S150), the extraction unit 1591 extracts the photographing data to be associated with the tag numbers of the selected appliances (Step S151).

The transmission unit 1592 then transmits the request for requesting the transmission of the photographed images to the camera system 90 (Step S152). The request includes the photographing data extracted by the extraction unit 1591.

The camera system 90 which has received the request photographs the appliances with the camera and at the angle included in the request. The camera system 90 transmits the photographed images to the monitoring operation device 10e.

When receiving the photographed images from the camera system 90 (Yes, in Step S153), the display processing unit 155 displays the received photographed images on the display 12 (Step S154).

According to the monitoring operation device 10e regarding the fifth embodiment of the invention, by easily displaying the photographed images by which the current states of the selected appliances among a plurality of appliances may be known, the aspects of the appliances in the plant 70 may be easily grasped. The photographed image display may be carried out with one action.

### [Sixth Embodiment]

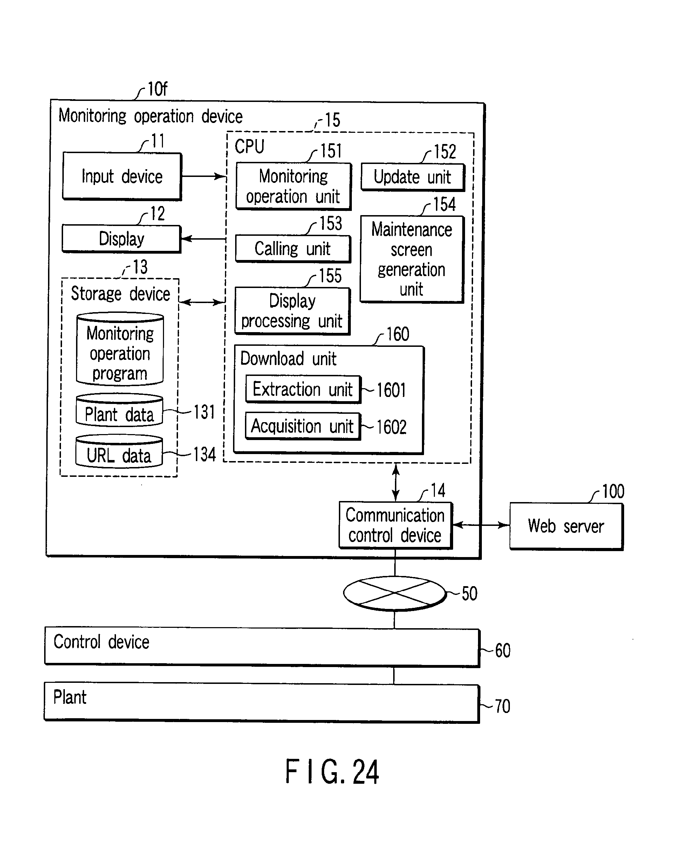

A monitoring operation device 10f regarding the sixth embodiment of the invention is, as shown in FIG. 24, connected to the control device 60 via the network 50. The operation device 10f includes a download unit 160 which carries out downloading of a Web page, may download a necessary Web page from a Web server 100 to be connected via a network such as the Internet and an intranet, and may easily display the Web page on the display 12. Here, the necessary Web page means a Web page with a description relating to the explanation of the appliances and a Web page of components necessary for maintenance of the appliances to be provided for the plant 70.

The download unit 160 includes an extraction unit 1601 and an acquisition unit 1602.

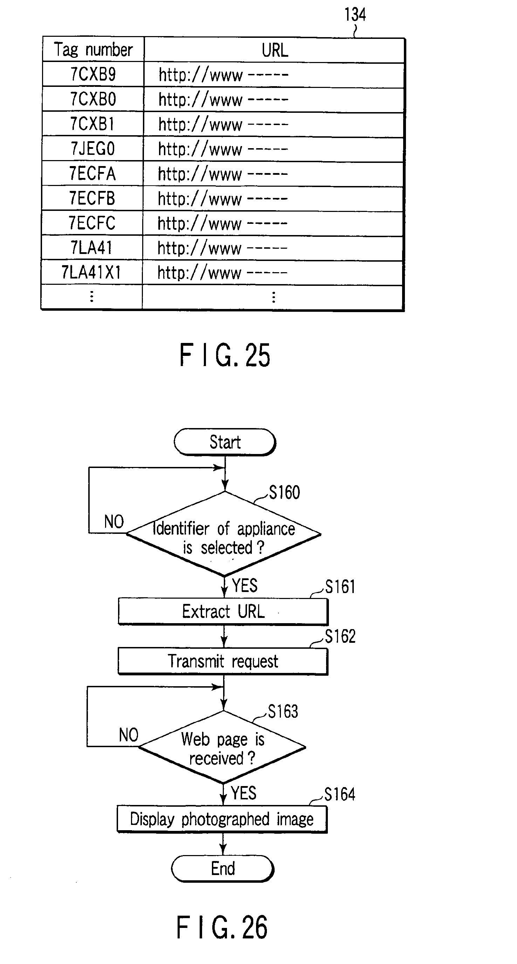

When the identifiers of the appliances with the tag numbers granted thereto are selected and when a display request for Web data relating to the appliances is input, the extraction unit 1601 extracts the URLs to be associated with the tag numbers from URL data 134. The URL data 134 is the data, in which the tag numbers and the URLs identifying the Web data relating to the appliances with the tag numbers granted thereto are associated with one another, as shown in the example in FIG. 25.

The acquisition unit 1602 accesses the Web server 100 in accordance with the URLs extracted by the extraction unit 1601 to acquire the Web data. The display processing unit 155 displays the acquired Web data on the display 12.

### (Web Page Display Processing)

The Web page display processing carried out by the monitoring operation device 10f will be described with reference to a flowchart illustrated in FIG. 26. The Web page display processing is carried out, for example, by the operation device 10f in the case in which the identifiers of the appliances are selected and the request for requesting the display of the Web page is input during the display of the monitoring screen in Step S100 of the flowchart illustrated in FIG. 4.

If the identifiers of the appliances are selected and the request for requesting the display of the Web page is input (Yes, in Step S160), the extraction unit 1601 extracts the URLs to be associated with the tag numbers granted to the appliances from the URL data 134 (Step S161).

After this, the acquisition unit 1602 transmits the request for requesting the transmission of the Web page to the Web server 100 through the communication control device 14 (Step S162). The request includes the URLs extracted by the extraction unit 1601.

Then, when receiving the Web page through the control device 14 from the Web server 100 (Yes, in Step 163), the display processing unit 155 displays the received Web page by using prescribed software on the display 12 (Step S164).

According to the aforementioned monitoring operation device 10f regarding the sixth embodiment, the Web data including information on the selected appliances may be displayed on the display 12 from the monitoring screen with one action.

### [Seventh Embodiment]

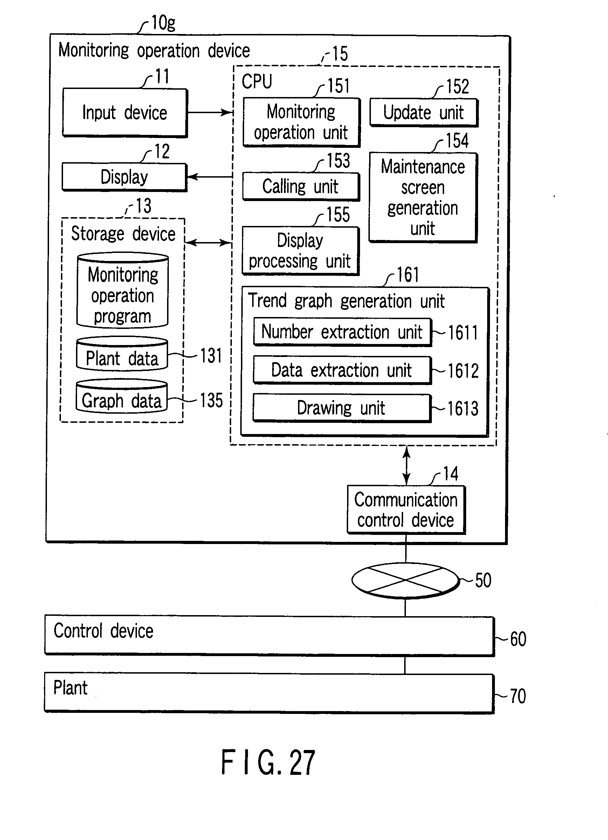

A monitoring operation device 10g regarding the seventh embodiment of the invention is, as shown in FIG. 27, connected to the control device 60 via the network 50. The operation device 10g includes a trend graph generation unit 161 and also has stored graph data 135 in the storage device 13, and may display a trend graph showing the states of the appliances in the plant 70.

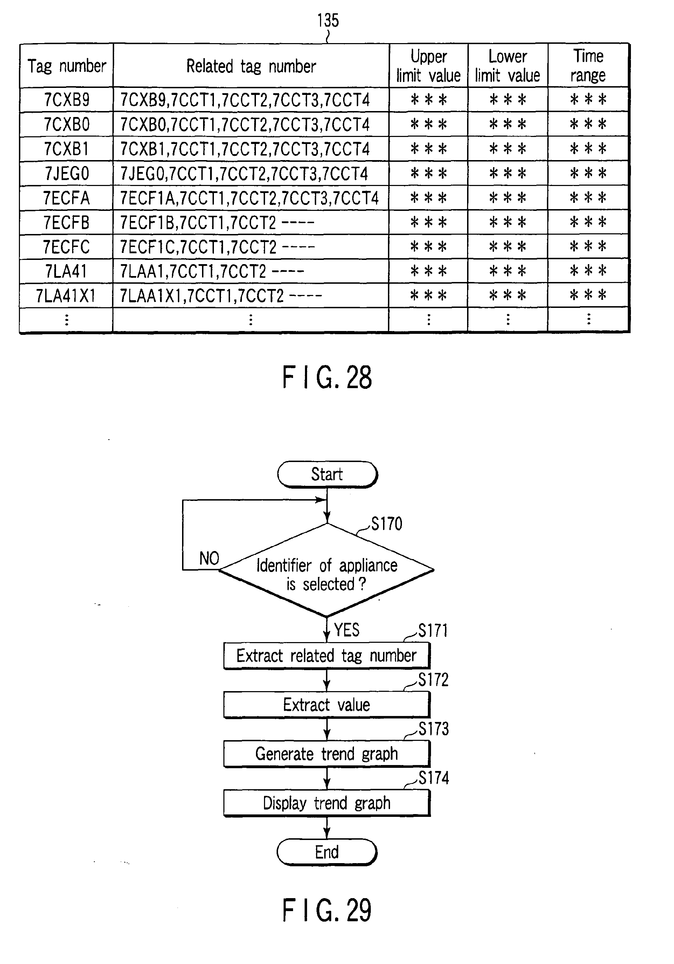

The graph data 135 is data to be utilized for generating the trend graph, and as illustrated in FIG. 28, the data 135 associates, by using tag numbers as keys, at least the tag numbers of the related appliances relating to the appliances with the tag numbers granted thereto, upper limit values (display upper limit value) and lower limit values (display lower limit value) that are an operation range of an appliance to be used for generating the trend graph with a time range. In generating the trend graph, the generation unit 161 determines a longitudinal axis by using the upper limit value and the lower limit value relating to each tag number, and sets a lateral axis by using the time range. The graph data 135 may also associate color data, etc., to be used in drawing the trend graph.

The trend graph generation unit 161 includes a number extraction unit 1611, a data extraction unit 1612 and a drawing unit 1613.

When a tag number is selected and a request for requesting a display of the trend graph is input, the number extraction unit 1611 extracts a record associated with the tag number from the graph data 135.

The data extraction unit 1612 extracts a state value of an appliance, suitable for an upper limit value and a lower limit value and a time range of a record extracted by the number extraction unit 1611, from the plant data 131. The drawing unit 1613 generates the trend graph on the basis of the extracted state value. The display processing unit 155 displays the generated trend graph on the display 12.

### (Trend Graph Display Processing)

The trend graph display processing to be carried out by the monitoring operation device 10g will be described by referring to a flowchart depicted in FIG. 29. The trend graph display processing is carried out, for example, by the operation device 10g in the case in which identifiers of appliances are selected and a request for requesting a display of a trend graph is input during the display of the monitoring screen in Step S100 of the flowchart shown in FIG. 4.

When the identifiers of the appliances are selected and the request for requesting the display of the trend graph is input (Yes, in Step S170), the number extraction unit 1611 extracts the record to be identified by the tag numbers granted to the appliances from the graph data 135 (Step S171).

The data extraction unit 1612 extracts state values of the appliances for each time from the plant data 131 on the basis of the tag numbers of the appliances selected in Step S170 and the related tag numbers included in the record extracted in Step S171 (Step S172).

When the state values are extracted, the drawing unit 1613 draws the trend graph in accordance with the upper limit value, the lower limit value and the time range extracted from the graph data on the basis of the state values extracted in Step S172 (Step S173).

After this, the display processing unit 155 utilizes prescribed software to display the trend graph generated from the trend graph generation unit 161 on the display 12 (Step S174).

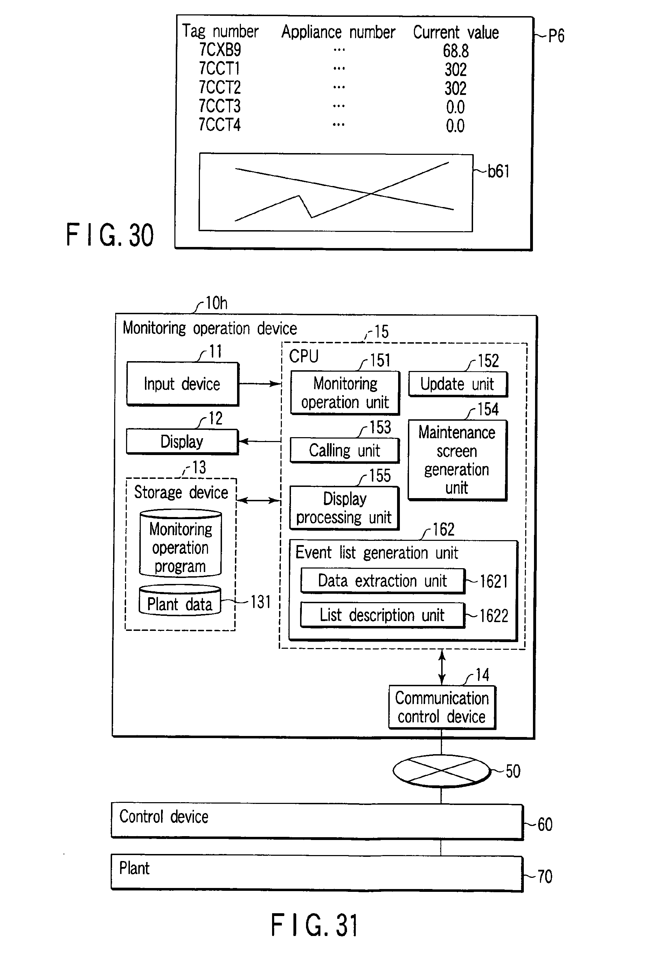

A tread graph b61 is, as shown in FIG. 30, included in a trend graph display screen P6 together with a sate display unit b63. The trend graph b61 shows states relating to the selected appliances and the appliances related to the selected appliances (appliances with related tag number) by setting each time as a lateral axis.

The monitoring operation device 10g regarding the aforementioned seventh embodiment may display the trend graph of the selected appliance on the display 12 with one action by selecting the tag numbers from the system view image and the list screen without having to select a graph number from the menu screen, as was done conventionally.

### [Eighth Embodiment]

A monitoring operation device 10h regarding the eighth embodiment of the invention is, as illustrated in FIG. 31, connected to the control device 60 via the network 50. The operation device 10h includes an event list generation unit 162, and may display an event list. Here, the event list is a list showing states of appliances within a prescribed time and a prescribed area.

The event list generation unit 162 includes, as depicted in FIG. 31, a data extraction unit 1621 and a list description unit 1622.

When tag numbers are selected and a request for requesting a display of the event list is input, the extraction unit 1621 extracts the state values of the appliances identified by the tag numbers from the plant data 131.

The list description unit 1622 generates an event list in which the state values extracted by the extraction unit 1621 are arranged in parallel in time series and associated with one another. The display processing unit 155 displays the event list generated on the display 12 by using prescribed software.

### (Event List Display Processing)

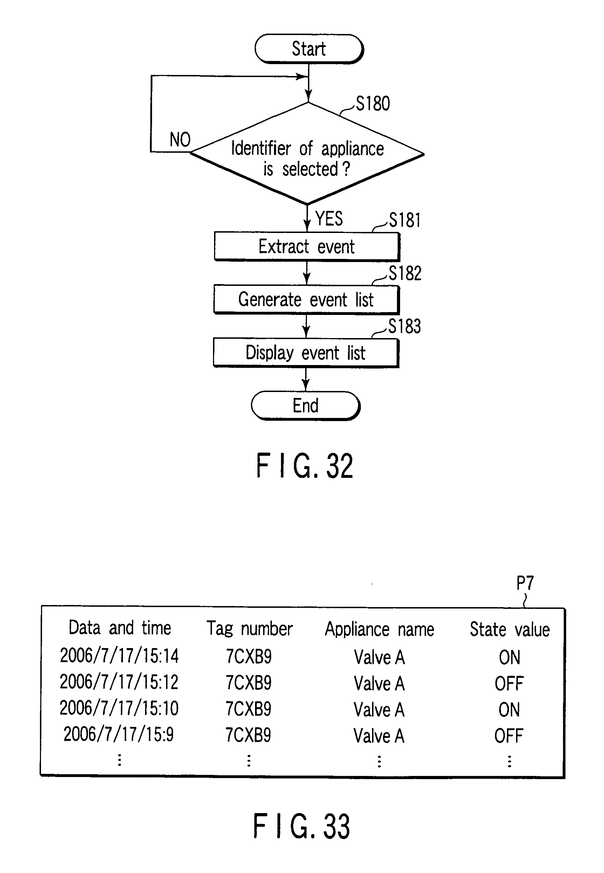

The event list display processing to be carried out by the monitoring operation device 10h will be explained by referring to a flowchart illustrated in FIG. 32. The display processing is, for example, carried out by the operation device 10h when the identifiers of the appliances are selected and the request for requesting the display of the event list during the display of the monitoring screen in Step S100 of the flowchart shown in FIG. 4 is input.

When the identifiers of the appliances are selected and the request for requesting the display of the event list is input (Yes, in Step S180), the data extraction unit 1621 extracts the events to be associated with the tag numbers granted to the selected device (Step S181).

When the event is extracted, the list description unit 1622 describes in time series the events extracted in Step S181 (Step S182).

The display processing unit 155 displays the event list generated from the event list generation unit 162 on the display 12 by utilizing the prescribed software (Step S183). An event list P7 associates the events carried out for each time with one another, as shown in the example in FIG. 33.

According to the foregoing eighth embodiment, the monitoring operation device 10h may display the event list relating to the appliances selected in a conventional manner by selecting the tag numbers from the system view screen and the list screen without having to use a filter function necessary for displaying the event list P7 from the menu screen.

### (Ninth Embodiment)

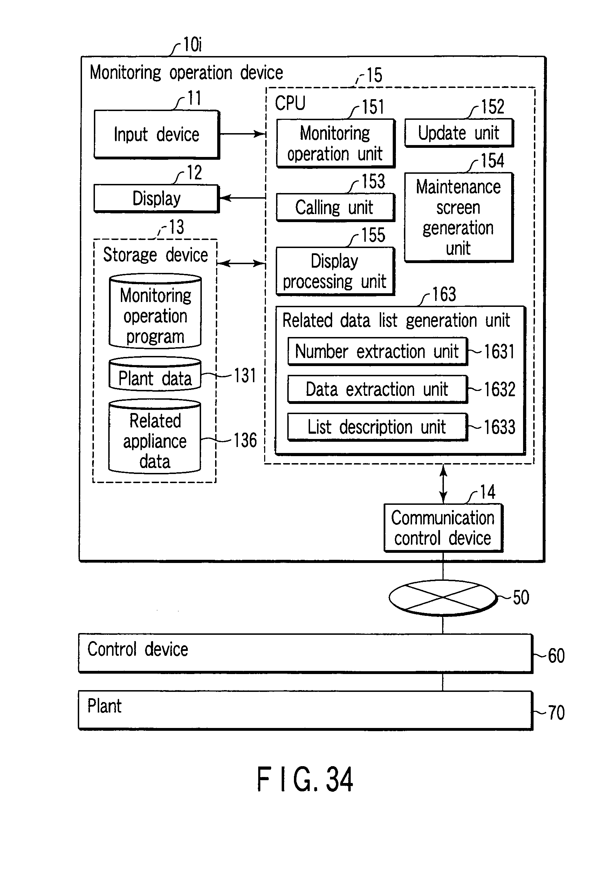

A monitoring operation device 10i regarding the ninth embodiment of the invention is, as illustrated in FIG. 34, connected to the control unit 60 via the network 50. The operation device 10i includes a related data list generation unit 163. The storage device 13 also stores related device data 136. The monitoring operation device 10 may display a related data list. Here, the related data list is a screen which displays information on a pair of target appliances and information about related appliances relating to the target appliances.

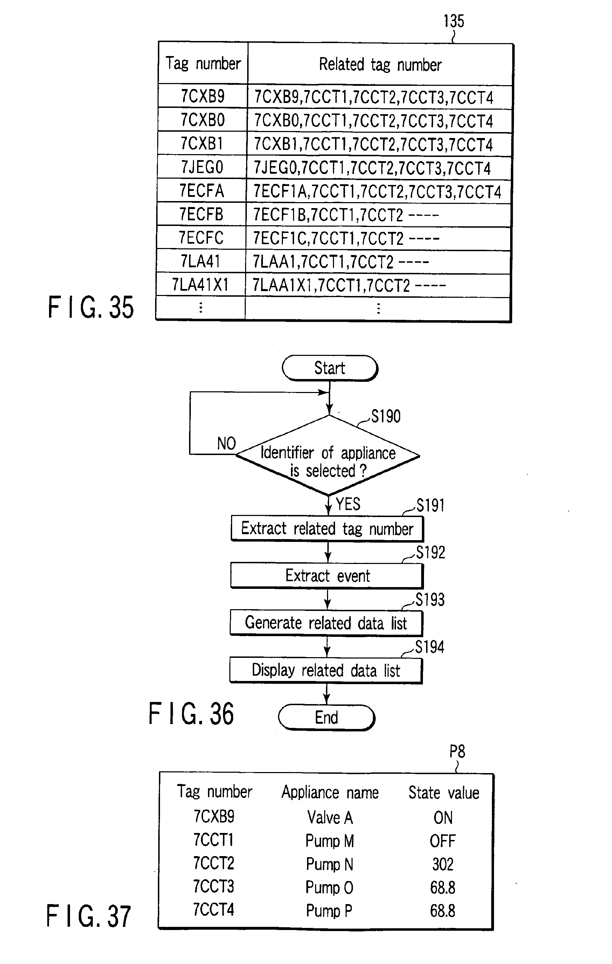

The related device data 136 is data to be utilized in order to generate the related data list, and is, as shown in FIG. 35, data in which the tag numbers of the appliances related to the appliances with the tag numbers granted thereto are associated with one another by using the tag numbers as keys.

As shown in FIG. 34, the related data list generation unit 163 includes a number extraction unit 1631, a data extraction unit 1632 and a list description unit 1633.

When the tag numbers are selected and the request for requesting the display of the related data list is input, the number extraction unit 1631 extracts the records which are identified with the tag numbers from the related device data 136.

The data extraction unit 1632 extracts the current values to be associated with the tag numbers and the current state values (current values) to be associated with the related tag numbers included in the extracted records from the plant data 131.

The list description unit 1633 associates the extracted current values with the tag numbers, and also generates a related data list which associates the extracted state values with the extracted related tag numbers.

The display processing unit 155 displays the related data list, which has been generated, on the display 12.

### (Related Data List Display Processing)

The related data list display processing to be performed by the monitoring operation device 10i will be explained by referring to a flowchart illustrated in FIG. 36. The related data list processing is implemented by the operation device 10i, for example, in the case in which the identifiers of the appliances are selected and the request for requesting the display of the related data list is input in the flowchart shown in FIG. 4 during the display of the monitoring screen in Step S100.

If the identifiers of the appliances are selected and the request for requesting the display of the related data list is input (Yes, in Step S190), the number extraction unit 1631 extracts the records to be identified with the tag numbers granted to the appliances from the related device data 136 (Step S191). After this, the data extraction unit 1632 extracts the current values to be associated with the tag numbers of the appliances selected in Step S190 and the current values to be associated with the tag numbers included in the records extracted in Step S191 (Step S192). When the current values are extracted, the list description unit 1633 generates the related data list, based on the current values extracted in Step S192 (Step S193).

The display processing unit 155 displays the related data list generated from the list description unit 1633 on the display 12 (Step 194).

FIG. 37 shows an example of the related data list which has been generated.

According to the ninth embodiment given above, the monitoring operation device 10g may display the plant data relating to the selected appliances on the display 12 with one action by selecting the tag numbers from the system view screen and the list screen without having to select the plant data relating to the selected appliances, as was done conventionally.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A plant control system (1a), **characterized by** comprising a monitoring operation device (10a) and a centralized management device (30a) to be connected to a control device (60) which controls appliances (701-70n) provided to a plant (70), wherein
the monitoring operation device (10a) includes:
a calling means (153) for transmitting a request for requesting a transmission of maintenance screen data of a control program relating to the appliances (701-70n) to the centralized management device (30a) when identifiers uniquely granted to the appliances (701-70n) are selected;
a maintenance screen generation means (154) for operating when the maintenance screen data and control program state value indicating a state of the control program are received in response to the request from the centralized management device (30a), and generates a maintenance screen by synthesizing the maintenance screen data and the control program state value; and
a display processing means (155) for displaying the maintenance screen on a display (12), and
the centralized management device (30a) includes:
a storage device (333) which stores control device data including the control program state value;
a storage device (332) which stores the maintenance screen data corresponding to the control device data; and
a maintenance screen processing means (351) for transmitting the maintenance screen data corresponding to the appliances (701-70n) and the control program state value indicating the state of the control program to the monitoring operation device (10a) when the request is received from the monitoring operation device (10a).

2. The plant controlling system according to claim 1, **characterized in that**
the monitoring operation device (10b) includes:
a parameter input means (156) for operating when change values to change parameter values set for controlling the appliances (701-70n) by the control device (60) are input, and transmitting a request which includes the change values and requests for requesting the centralized management device (30b) to change the parameter values to the control device (60), and
the centralized management device (30b) includes:
a parameter setting means (353) for transmitting a request for changing the parameter values into the change values to the control device (60) when the request including the change values is received from the monitoring operation device (10b).

3. The plant controlling system according to claim 1, **characterized in that**
the monitoring operation device (10c) includes:
a transmission means (1571) for operating when a simulation value to simulate a change in the control program state value including the control device data is input, and transmitting a request including the simulation value and requesting a transmission of a simulation result to the centralized management device (30c); and
the centralized management device (30c) includes:
a transmission means (3542) for transmitting a request for requesting a change of the control program state value into the simulation value when the request including the simulation value is received from the monitoring operation device (10c); and
a simulation means (354) which include a notification means (3544) for transmitting the simulation result to the monitoring operation device (10c) when the simulation result is received from the control device (60).

4. A monitoring operation device (10a) to be connected to a centralized management device (30a) and also to a control device (60) controlling appliances (701-70n) provided to a plant (70), **characterized by** comprising:
a calling means (153) for transmitting a request for requesting a transmission of maintenance screen data of a control program relating to the appliances (701-70n) when identifiers uniquely granted to the appliances (701-70n) are selected;
a maintenance screen generation means (154) for operating when the maintenance screen data and control program state value indicating a state of the control program are received in response to the request from the centralized management device (30a), and generating a maintenance screen by synthesizing the maintenance screen data and the control program state value; and
a display processing means (155) for displaying the maintenance screen on a display (12).

5. The monitoring operation device according to claim 4, **characterized by** further comprising:
a storage device (13) which is connected to a storage device (80) storing document data to be identified by identifiers and stores document list data with identifiers of documents relating to the appliances (701-70n) associated therewith in the identifiers of the storage devices (13);
a document acquisition means (158) for operating when the identifiers of the appliances (701-70n) are selected and a request for requesting a display (12) of the document data is input, extracting the identifiers of the document data to be associated with the identifiers of the selected appliances from the document list data, and also reading out the document data identified by the extracted identifiers from the connected storage device (80); and
a display processing means (155) for displaying the read-out document data.

6. The monitoring operation device according to claim 4, **characterized by** further comprising:
a storage device (13) which is connected to a camera system (90) including cameras (901-90m) to be mounted at prescribed positions in a plant (70) and providing photographed images with the appliances photographed therein in response to a request and stores camera data in which identifiers of the cameras to photograph the appliances and photographing directions of the cameras (901-90n) are associated with one another;
an image acquisition means (159) for operating when identifiers of the appliances are selected and a request for requesting a display of the photographed images is input, extracting the identifiers of the cameras and the photographing directions to be associated with the selected identifiers of the appliances, and also transmitting a request which includes the extracted identifiers and the photographing directions of the cameras and requests a transmission of photographed images to the camera system (90); and
a display processing means (155) for displaying the photographed images received from the camera system (90) on a display (12).

7. The monitoring operation device according to claim 4, **characterized by** further comprising:
a storage device (13) which is connected to a Web server (100) providing Web data to display a Web page in response to a request and stores URL data with URLs identifying the Web page relating to the appliances (701-70n) therewith;
a download means (160) for accessing the URLs to be associated with the identifiers of the appliances to acquire the Web data from the Web server (100) when the identifiers of the appliances (701-70n) are selected and a request for requesting a display of the Web page is input; and
a display processing means (155) for displaying the Web page on the basis of the Web page data acquired from the Web server (100).

8. The monitoring operation device according to claim 4, **characterized by** further comprising:
a storage device (13) which stores graph data in which identifiers of related appliances relating to the identifiers of the appliances, display upper limits, display lower limits and time ranges to be used for generating a trend graph with respect to the appliances are associated with one another;
a storage device (13) which stores plant data in which state values indicating states of the respective times of the appliances (701-70n) are associated with the identifiers of the appliances;
a trend graph generation means (161) for operating when identifiers of the appliances (701-70n) are selected and a request for requesting displays of trend graphs are input, extracting the identifiers of the related appliances, the display upper limits, the display lower limits and the time ranges to be associated with the identifiers of the appliances from the graph data, extracting the state values of the appliances and the related appliances suitable for the extracted display upper limits, display lower limits and time ranges from the plant data, and generating trend graphs on the basis of the extracted state values; and
a display processing means (155) for displaying the generated trend graphs.

9. The monitoring operation device according to claim 4, **characterized by** further comprising:
a storage device (13) which stores plant data, in which state values indicating states at the respective times of the appliances are associated with one another, in the identifiers of the appliances;
an event list generation means (162) for operating when the identifiers of the appliances (701-70n) are selected and a request for requesting a display of an event list is input, extracting the state values to be associated with the identifiers of the appliances from the plant data, and generating the event list in which the extracted state values are laid in parallel in order of time; and
a display processing means (155) for displaying the generated event list on the display (12).

10. The monitoring operation device according to claim 4, **characterized by** further comprising:
a storage device (136) which stores related appliance data, in which identifiers of related appliances relating to the appliances are associated with one another, in the identifiers of the appliances;
a storage device (13) which stores plant data, in which identifiers of related appliances relating to the appliances are associated with one another, in the identifiers of the appliances;
a related data list generation means (163) for extracting the identifiers of the related appliances to be associated with the identifiers of the appliances from related appliance data, extracting the state values to be associated with the identifiers of the appliances and the extracted identifiers of the related appliances from the plant data, and generating a related data list by associating the extracted state values with the identifiers of the appliances when the identifiers of the appliances are selected and a request for requesting a display of appliance state data is input; and
a display processing means (155) for displaying the generated appliance state data on the display (12).

11. A plant monitoring program for use in a monitoring operation device (10a) which is connected to a centralized management device (30a) and also connected to a control device (60) controlling appliances (701-70n) provided to a plant (70), which causes a computer to execute:
a calling step of transmitting a request for requesting a transmission of a maintenance screen data of a control program relating to the appliances to the centralized management device (30a) when identifiers uniquely granted to the appliances are selected;
a maintenance screen generating step of operating when the maintenance screen data and control program state values which indicate states of the control program are received in response to the request from the centralized management device (30a), and of generating a maintenance screen by synthesizing the maintenance screen data and the control program state values; and
a step of displaying the maintenance screen on the display.
